Europäisches Patentamt

European Patent Office

Office européen des brevets

(11) Publication number: **0 454 219 A1**

# EUROPEAN PATENT APPLICATION

(21) Application number: 91200893.5

(22) Date of filing: 16.04.91

(51) Int. Cl.5: **C08G 18/08**, C08G 18/22,
C08G 18/24, C08G 18/42,
C08G 18/62, C09D 175/04

(30) Priority: 24.04.90 EP 90201023

(43) Date of publication of application:
30.10.91 Bulletin 91/44

(84) Designated Contracting States:
AT BE CH DE DK ES FR GB IT LI NL SE

(71) Applicant: AKZO N.V.
Velperweg 76
NL-6824 BM Arnhem(NL)

(72) Inventor: **Noomen, Arie**
**Schoonoord 22**
**NL-2215 ED Voorhout(NL)**
Inventor: **Seetz, Johannes Wilhelmus**
**Franciscus Lucas**
**Julia Culpstraat 50**
**NL-7558 JB Hengelo(NL)**
Inventor: **Klinkenberg, Huig**
**Noordeinde 23**
**NL-2225 CS Katwijk aan Zee(NL)**

(74) Representative: **Schalkwijk, Pieter Cornelis et**
**al**
**AKZO N.V., Patent Department (Dept. CO),**
**P.O. Box 9300**
**NL-6800 SB Arnhem(NL)**

(54) Polyurethane reaction mixtures and coating compositions therefrom.

(57) The present invention relates generally to polyurethanes produced via the reaction between a polyol and polyisocyanate in the presence of a particular complexed polyisocyanate catalyst, wherein the polyol component comprises an acid number of about 5 or less. The polyurethane systems in accordance with the present invention have the advantage that they are readily curable at ambient temperatures and without vaprous amine activators and, under such curing conditions, display an excellent balance between potlife and cure speed.

EP 0 454 219 A1

Background of the Invention

The present invention relates generally to polyurethanes produced via the catalyzed reaction between a polyol and polyisocyanate, and to coating compositions based upon these reaction mixtures.

Polyurethane coating compositions are often formulated as two-pack systems - the first pack including the polyol and, in most cases, the catalyst and other normal additives, and the second pack including the polyisocyanate crosslinker. The two packs are normally mixed just prior to application of the coating.

Upon mixing of the two packs, a chemical reaction begins between the hydroxyl groups of the polyol and the isocyanate groups of the polyisocyanate, ultimately leading to gellation. The period wherein the viscosity of the system remains low enough to allow application onto a substrate is often referred to as "potlife."

Some polyurethane systems, especially those based upon low molecular weight polyols, have extremely slow cure speeds. The cure speed can be improved by addition of any one of a number of well-known polyurethane catalysts; however, the use of a catalyst may increase the cure speed to such an extent that the potlife of the system becomes inadequate.

One effective solution to this problem is taught by US4788083, which is hereby incorporated by reference herein for all purposes. This publication discloses a particular complexed (blocked) catalyst which provides an extended potlife yet is readily activatible with vaprous amines or heat. The described complexed catalyst generally comprises the reaction product of a tin and/or bismuth polyurethane catalyst with a molar excess of a complexing agent selected from a mercapto or polyphenol compound.

Use of the vaprous amine and/or heat activation methods as set forth in US4788083, however, may present problems on a commercial scale. For example, activation with vaprous amines requires the use of special and expensive equipment which is not compatible with current airless spray techniques. Additionally, accurate dosage of the amine activator is difficult, which may have a negative influence on coating appearance and resistance to yellowing. Use of heat activation requires an oven, which is problematic with larger coated objects such as aircraft, ships or steel structures.

There exists a need, therefore, for a polyurethane system which can utilize the effective blocked catalysts of US4788083 without the need for the type of activation steps disclosed therein.

Summary of the Invention

The present invention meets this need by providing a catalyzed reaction mixture for producing a polyurethane, which catalyzed reaction mixture comprises (A) a polyol component, (B) a polyisocyanate component and (C) a complexed polyurethane catalyst from (C1) a tin and/or bismuth polyurethane catalyst and (C2) a molar excess of a complexing agent for such polyurethane catalyst, characterized in that the polyol component comprises an acid value of about 5 or less.

It should be noted that, when utilized herein, the acid value is expressed in units of mg KOH/g.

The present invention further provides a method for producing a polyurethane from this catalyzed reaction mixture by reacting the polyol component (A) and the polyisocyanate component (B) in the presence of the complexed polyurethane catalyst (C).

The present invention still further provides a coating composition based upon the above catalyzed polyurethane reaction mixture.

In another aspect of the present invention, the potlife of the catalyzed reaction mixtures and coating compositions of the present invention can be increased through the inclusion of a volatile acid in the reaction mixture.

The catalyzed reaction mixtures and coating compositions in accordance with the present invention are readily curable at ambient temperatures and without the vaprous amine activators such as required by the systems of US4788083. Under such ambient temperature curing conditions, the catalyzed reaction mixtures and coating compositions display an excellent balance between potlife and cure speed.

These and other features and advantages of the present invention will be more readily understood by those skilled in the art from a reading of the following detailed description.

Detailed Description of the Preferred Embodiments

As mentioned above, the present invention, in its broadest concept, provides a catalyzed reaction mixture for producing a polyurethane, which catalyzed reaction mixture comprises (A) a particular polyol component, (B) a polyisocyanate component and (C) a particular complexed polyurethane catalyst.

## Polyol Component (A)

The polyol component may comprise one polyol or a combination of different polyols. As suitable polyols may be mentioned any of those utilizable for the production of polyurethanes. Such polyols are, in general, well known to those skilled in the art. See, for example, H.J. Saunders and K.C. Frisch, Polyurethane Chemistry and Technology, Part 1 - Chemistry, New York:Interscience, 1964.

For the coating compositions in accordance with the present invention, any polyol suitable for such use may be considered suitable for use in the present system. Such polyols include a wide variety of polyether, polyester, polyacrylic, polyvinyl, poly(epoxyester), polycarbonate, polyurethane and polyurea based polyols. These and other suitable polyols are well-known to those skilled in the art as exemplified, for example, by K. Weigel, Polyurethan Lacke, Mering(BRD):Holz Verlag, 1966.

Of the wide variety of potentially suitable polyols, preferred are the polyester polyols and polyacrylic polyols. Suitable polyester polyols can be obtained, for instance, by the polycondensation of one or more di- and/or higher functional carboxylic acids with one or more di- and/or higher functional hydroxy compounds, optionally in combination with one or more monofunctional carboxylic acids and/or hydroxy compounds. Suitable acrylic polyols can be obtained, for instance, by the (co)polymerization of hydroxy-functional acrylic monomers with other ethylenically unsaturated comonomers in the presence of a free radical initiator.

The particular choice of polyol component, of course, depends upon a number factors including, primarily, the other components of the reaction mixture and the desired end use. These and other factors are well-known to those skilled in the art, who can make the proper selection of the polyol component accordingly.

In accordance with the present invention, the particularly selected polyol component should comprise an acid value (collective) of about 5 or less. It has been generally found that, for acid values of greater than about 5, the cure speed of the reaction mixture decreases significantly. It is especially preferred that the acid value of the polyol component should be about 2 or less.

Based upon the desired polyol component, one skilled in the art can readily provide such polyol component with the desired acid value. This may be accomplished in any well-known manner such as, for example, by proper selection of monomers and/or by reaction of excess acid functionality with, e.g., a carbodiimide or monoepoxy compound.

## Polyisocyanate Component (B)

The polyisocyanate component may comprise one polyisocyanate or a combination of different polyisocyanates. As with the polyol component, as suitable polyisocyanates may be mentioned any of those utilizable for the production of polyurethanes. Such polyisocyanates are, in general, well known to those skilled in the art. See, for example, previously incorporated US4788083 at column 8, line 63 through column 9, line 30.

Preferred among the polyisocyanates are aliphatic polyisocyanates, such as hexamethylene diisocyanate, and especially the isocyanurate and biuret trimers of such aliphatic isocyanates.

Although the polyol and polyisocyanate components may be utilized in widely varying ratios, it is preferred that the ratio of the isocyanate equivalents to hydroxyl equivalents range from about 1/2 to about 2/1.

Of course, the particularly chosen polyisocyanate and the precise ratio of polyol to polyisocyanate will be dictated by a number of factors such as those mentioned above. Again, these and other factors are well-known to those skilled in the art, who can make the proper selections accordingly.

## Complexed Polyurethane Catalyst (C)

The isocyanate groups of the polyisocyanate component crosslink with the hydroxyl groups of the polyol component under the influence of the polyurethane catalyst. Suitable polyurethane catalysts for use with the present invention are the complexed catalysts as described in detail in previously incorporated US4788083, to which reference may be had for further details.

In general, these complexed polyurethane catalysts may be described as (C1) tin and/or bismuth polyurethane catalysts which have been complexed (blocked) by reaction with (C2) a molar excess of a complexing agent selected from mercapto compounds and/or polyphenols with adjacent hydroxyl groups.

A wide variety of tin and bismuth polyurethane catalysts are suitable. As specific examples may be mentioned those detailed at column 5, lines 8-32 of previously incorporated US4788083. Especially preferred include tin octoate and dibutyltin dilaurate.

Again a wide variety of mercapto compounds and polyphenols are suitable for use as the catalyst complexing agent. Preferred are the mercapto compounds such as the mono- and polyfunctional, monomeric, oligomeric and polymeric mercaptans described at column 5, line 33 through column 8, line 21 of previously incorporated US4788083. Especially preferred include the oligomeric polymercapto compounds such as trimethylolpropane trimercaptopropionate and pentaerythritol pentamercaptopropionate.

As indicated above, the complexed polyurethane catalysts are produced by reacting the polyurethane catalyst with a molar excess of the complexing agent. Catalyst/complexing agents ratios may otherwise vary widely. It is preferred, however, the molar ratio of complexing agent to metal group of the catalyst ranges from about 2:1 to about 500:1, more preferably from about 10:1 to about 100:1, and especially from about 10:1 to about 50:1.

The amount of polyurethane catalyst (uncomplexed) generally ranges from about 0,01 to about 0,5 wt%, based upon the combined weight (solids) of polyol component (A) and polyisocyanate component (B). This amount, of course, can vary widely depending, for example, on the particular components, desired end use, curing conditions and other factors well-known and appreciable to those skilled in the art.

One important variable as to the amount of catalyst relates to the acid value of the polyol component. It has been found that, as the acid value decreases, the cure speed of the catalyzed reaction mixture accelerates. Of course, the amount of catalyst utilized can also influence the cure speed; therefore, these parameters can be utilized to steer the potlife/cure speed balance to an optimum.

It is especially preferred, due to the presence of the potentially odorous mercapto compounds as complexing agents for the polyurethane catalyst, that the required amount of catalyst be minimized to the extent possible. For this reason it is preferred, as mentioned above, that the polyol component comprise a low acid value, specifically about 2 or less.

It should be noted that the use of very low acid value polyols may result in a quite short potlife. If necessary, the low acid value of the polyol component can be compensated by the addition of a volatile acid component to the reaction mixtures and coating compositions in accordance with the present invention. In this manner, the required amount of catalyst can be kept at a minimum.

The volatile acid component must be substantially volatile under the curing conditions of the polyurethane reaction mixture, as further discussed below. In preferred embodiments the volatile acid component is selected from volatile acids having a boiling point of about 150°C or less. As preferred volatile acids may be mentioned those selected from monocarboxylic acids having from 1-4 carbon atoms. Particularly preferred are formic acid and acetic acid.

Depending upon the field of application, the reaction mixtures in accordance with the present invention may also optionally contain one or more pigments, dyes and usual intermediary agents, additives and/or solvents. Examples of suitable organic solvents include esters, ketones, aromatic and aliphatic hydrocarbons.

As mentioned above, a particularly suitable application for the reaction mixtures in accordance with the present invention is as an ambient temperature curable coating composition. When so utilized, the reaction mixtures may contain one or more additives common to the paint industry, such as the types mentioned above and other well-known to those skilled in the art.

These coating compositions may be applied to a substrate in any convenient manner such as, for example, by brushing, spraying or dipping. Suitable substrates include metals, wood, board, plastics and leather.

As indicated above, the curing of the above-described reaction mixtures and coating compositions is preferably carried out at ambient temperatures, generally between about 0°C and about 40°C, and preferably between about 5°C and 30°C.

The foregoing more general discussion of the present invention will be further illustrated by the following specific examples.

EXAMPLES

Preparation of Polyols

(A) Polyol A

In a 10 liter reactor fitted with a stirrer, Dean-Stark water separator, packed column and nitrogen inlet tube were charged:

    680 g       of 1,4-dimethanol cyclohexane,

2873 g    of hexahydrophthalic anhydride and
1595 g    of 3,5,5-trimethyl hexanoic acid,

which were heated, with stirring and under a nitrogen atmosphere, to 165°C and maintained at this temperature for 2 hours.

Subsequently, 2532 g of trimethylol propane were added to the reactor, and the temperature of the reaction mixture raised to 230°C. The reaction water was distilled off at a rate such that the temperature at the top of the packed column did not exceed 102°C, and the reaction was run at 230°C until 460 g of water had been collected.

The reaction mixture was then cooled to 175°C, and the packed column was replaced with an unpacked Vigruex column. After the addition of 400 g of xylene, the reaction was continued azeotropically under xylene return until an acid value of 9,3 (mg KOH/g) was obtained in the solid reaction product.

Next, the reaction mixture was cooled to 180°C, and 320 g of the glycidylester of a 1,1-disubstituted branched decane monocarboxylic acid (commercially available under the trade designation Cardura E of Shell) were added. The reaction mixture was maintained at 180°C for a period of 2 hours, then cooled to 130°C and diluted with 430 g of xylene.

Obtained was a polyester resin solution having a solids content of 91,4% and a Gardner color of 1.

This polyester resin solution was further diluted with xylene to a solids content of 70%, the resulting solution having a viscosity of 580 mPa.s at 20°C.

The polyester resin had an acid value of 0,2, an hydroxyl number of 160, and an Mn of 1090 and Mw of 3140 (as measured by gel permeation chromotography).

(B) Polyol B

In a 2 liter reactor fitted with a stirrer, reflux condensor and nitrogen inlet tube were charged 1696 g of the 91,4% solids solution of polyol A and 40,3 g of phthalic anhydride. The reaction mixture was heated, with stirring and under a nitrogen atmosphere, to 160°C and maintained at this temperature for 2 hours.

After cooling to 130°C and addition of 135 g of butyl acetate, a polyester resin solution was obtained having a solids content of 85,2% and a Gardner color of 1.

This polyester resin solution was further diluted with butyl acetate to a solids content of 70%, the resulting solution having a viscosity of 550 mPa.s at 20°C.

The polyester resin had an acid value of 9,0, an Mn of 1120, an Mw of 3280 and a calculated hydroxyl number of 146.

(C) Polyol C

In a 2 liter reactor fitted with a thermometer, stirrer, feed tube, nitrogen inlet tube and condensor were charged 548 g of xylene, and heated to reflux temperature under a nitrogen atmosphere. Over a period of three hours, while maintaining the reaction temperature at reflux, was then added a pre-mixed blend of:

153 g    of styrene,
153 g    of methyl methacrylate,
315 g    of 2-hydroxyethyl methacrylate,
279 g    of butyl acrylate,
40,5 g    of t.butylperoxy-3,5,5-trimethyl hexanoate (commercially available under the trade designation Trigonox 42S from Akzo Chemicals).

After completing the addition of the monomer mixture, a second mixture of 1,8 g of t.butylperoxy-3,5,5-trimethyl hexanoate and 80 g of xylene was added over a period of 30 minutes, and the reaction proceeded at reflux for another 2 hours. Subsequently, the batch was allowed to cool to room temperature.

Obtained was an acrylic resin solution having a solids content of 59,2% and a viscosity of 3800 mPa.s at 20°C.

The acrylic resin had an acid value of 0,9, an Mn of 4475, an Mw of 9090, a calculated hydroxyl number of 150 and a calculated glass transition temperature (Tg) of 295K.

(D) Polyol D

In a 2 liter reactor fitted with a thermometer, stirrer, feed tube, nitrogen inlet tube and condensor were charged 565 g of xylene, and heated to reflux temperature under a nitrogen atmosphere. Over a period of three hours, while maintaining the reaction temperature at reflux, was then added a pre-mixed blend of:

145 g    of styrene,

145 g    of methyl methacrylate,
315 g    of 2-hydroxyethyl methacrylate,
283 g    of butyl acrylate,
11,7 g   of acrylic acid and
40,5 g   of t.butylperoxy-3,5,5-trimethyl hexanoate.

After completing the addition of the monomer mixture, a second mixture of 1,8 g of t.butylperoxy-3,5,5-trimethyl hexanoate and 60 g of xylene was added over a period of 30 minutes, and the reaction proceeded at reflux for another 2 hours. Subsequently, the batch was allowed to cool to room temperature.

Obtained was an acrylic resin solution having a solids content of 59,5% and a viscosity of 6250 mPa.s at 20°C.

The acrylic resin had an acid value of 10,6, an Mn of 4240, an Mw of 9090, a calculated hydroxyl number of 150 and a calculated Tg of 295K.

(E) Polyol E

In a 2 liter reactor fitted with a thermometer, stirrer, feed tube, nitrogen inlet tube and condensor were charged 568 g of xylene, and heated to reflux temperature under a nitrogen atmosphere. Over a period of three hours, while maintaining the reaction temperature at reflux, was then added a pre-mixed blend of:

145 g    of styrene,
145 g    of methyl methacrylate,
315 g    of 2-hydroxyethyl methacrylate,
270 g    of butyl acrylate,
23,9 g   of acryloxy propionic acid (commercially available uder the trade designation Sipomer B-CEA from Alcolac Inc.) and
40,5 g   of t.butylperoxy-3,5,5-trimethyl hexanoate.

After completing the addition of the monomer mixture, a second mixture of 1,8 g of t.butylperoxy-3,5,5-trimethyl hexanoate and 60 g of xylene was added over a period of 30 minutes, and the reaction allowed to proceeded at reflux for another 2 hours. Subsequently, the batch was allowed to cool to room temperature.

Obtained was an acrylic resin solution having a solids content of 59,3% and a viscosity of 7000 mPa.s at 20°C.

The acrylic resin had an acid value of 10,2, an Mn of 4400, an Mw of 10450, a calculated hydroxyl number of 150 and a calculated Tg of 295K.

Examples 1-3 and Comparative Examples 1-4

Coating compositions were prepared from the recipes as set forth below in Table I (quantities are given in grams).

TABLE I

| Component | EX.1 | EX.2 | EX.3 | CE.4 |
|---|---|---|---|---|
| Polyol A (70% solids) | 70,0 | 55,7 | 31,8 | ---- |
| Polyol B (70% solids) | ---- | 14,3 | 38,2 | 70,0 |
| Crosslinker[1] | 59,0 | 57,2 | 55,2 | 51,9 |
| Butyl acetate | 7,5 | 6,2 | 6,8 | 7,2 |
| Methoxy-1-propylacetate-2 | 14,7 | 14,9 | 15,1 | 15,5 |
| Methyl amyl ketone | 23,5 | 23,7 | 24,1 | 24,8 |
| Ethyl-3-ethoxypropionate | 20,6 | 20,9 | 21,1 | 21,7 |
| Dibutyl tin dilaurate (1% in butyl acetate) | 2,55 | 2,55 | 2,50 | 2,45 |
| Copolymer[2] | 0,5 | 0,5 | 0,5 | 0,5 |
| Trimethylolpropane trimercaptopropionate (10% in butyl-acetate) | 2,35 | 2,35 | 2,30 | 2,25 |
| ACID VALUE of polyol component (mg KOH/g) | 0,2 | 2,0 | 5,0 | 9,0 |

1 = a tri-isocyanurate based upon hexamethylene diisocyanate, commercially available under the trade designation Desmodur N 3390 from Bayer AG.

2 = a solution of a polyether modified methyl alkyl polysiloxane copolymer, commercially available under the trade designation BYK 325 from BYK Chemie.

For Comparative Examples 1-3, Examples 1-3 (respectively) were repeated except that no trimethylolpropane trimercaptopropionate was added.

The coating compositions of these examples were tested for potlife, which was measured as the time in which the viscosity of the composition increased from 18" to 30" as measured with the aid of a DIN Cup 4.

The coating compositions were applied onto steel panels to a dry layer thickness of 80 μm after curing for 24 hours at 20°C. The petrol resistance of the so-applied coatings was tested qualitativly as the degree of softening from a drop of premium grade petrol after 1 minute. The methyl ethyl ketone resistance of such coatings was measured as the number of seconds after which the coating began to soften from a drop of methyl ethyl ketone.

The Persoz hardness of these coatings (in seconds) was measured both after 24 hours and one week curing at 20°C.

The results are presented below in Table II.

TABLE II

| Example | Pot Life | Petrol Resistance | MEK Resistance | Persoz Hardness 24hrs. | 1week |
|---------|----------|-------------------|----------------|------------------------|-------|
| 1 | 3hr. 10min. | no soft. | 40" | 55" | 95" |
| C1 | 50min. | no soft. | 45" | 95" | 90" |
| 2 | >8 hr. | v. slight soft. | 30" | 52" | 103" |
| C2 | 4 hr. | v. slight soft. | 35" | 55" | 97" |
| 3 | >8 hr. | slight soft. | 20" | 35" | 125" |
| C3 | 8 hr. | slight soft. | 20" | 45" | 90" |
| C4 | >8 hr. | softening | <10" | 17" | 117" |

Examples 4-7 and Comparative Examples 5-8

Coating compositions were prepared from the recipes as set forth below in Table III (quantities are given in grams).

## TABLE III

| Component | EX.4 | EX.5 | EX.6 | EX.7 |
|---|---|---|---|---|
| Polyol A (70% solids) | 63,8 | 32,15 | 70,0 | 70,0 |
| Polyol B (70% solids) | 6,8 | 37,95 | ---- | ---- |
| Crosslinker (see Table I) | 55,2 | 53,5 | 55,5 | 55,5 |
| Butyl acetate | 6,8 | 6,6 | 6,9 | 6,9 |
| Methyl amyl ketone | 19,1 | 19,2 | 19,2 | 19,2 |
| Ethyl amyl ketone | 12,0 | 12,1 | 12,0 | 12,0 |
| n.butyl propionate | 17,1 | 17,0 | 17,0 | 17,0 |
| Dibutyl tin dilaurate (1% in butyl acetate) | 2,4 | 2,4 | 2,4 | 2,4 |
| Copolymer (see Table I) | 0,5 | 0,5 | 0,5 | 0,5 |
| Trimethylolpropane trimercapto-propionate (10% in butyl-acetate) | 2,2 | 2,2 | 2,2 | 2,2 |
| Acetic acid (10% in butyl acetate) | ---- | ---- | 0,64 | 3,20 |
| ACID VALUE of polyol component (mg KOH/g) | 1,0 | 5,0 | 0,2 | 0,2 |
| TOTAL ACID VALUE | 1,0 | 5,0 | 1,0 | 5,0 |

For Comparative Examples 5-8, Examples 4-7 (respectively) were repeated except that no trimethylolpropane trimercaptopropionate was added.

These coating compositions were tested for potlife, petrol resistance, methyl ethyl ketone resistance and Persoz hardness as above, as well as for dust free drying time and dry touch time. The results are presented below in Table IV.

TABLE IV

| Ex. | Potlife (hours) | Dust Free Dry (min.) | Touch Dry (min.) | Petrol Resist. | MEK Resist. (sec.) | Persoz Hard. (sec.) 24 hr. | 1 week |
|---|---|---|---|---|---|---|---|
| 4 | >8 | 230 | 280 | v.sl.soft. | 35 | 61 | 220 |
| C5 | 4,5 | 190 | 260 | v.sl.soft. | 40 | 65 | 200 |
| 5 | >8 | 330 | 495 | v.sl.soft. | 20 | 54 | 220 |
| C6 | 8 | 270 | 465 | sl.soft. | 20 | 55 | 215 |
| 6 | 4 | 75 | 85 | no soft. | 45 | 66 | 198 |
| C7 | 1,25 | 60 | 70 | no soft. | 45 | 68 | 176 |
| 7 | >8 | 140 | 165 | sl.soft. | 35 | 53 | 208 |
| C8 | 3 | 100 | 125 | v.sl.soft. | 35 | 51 | 191 |

Examples 8-10 and Comparative Examples 9-12

Coating compositions were prepared from the recipes as set forth below in Table V (quantities are given in grams).

## TABLE V

| Component | EX.8 | EX.9 | EX.10 | CE.12 |
|---|---|---|---|---|
| Polyol C (59,2% solids) | 90,6 | 80,5 | 52,5 | ---- |
| Polyol D (59,5% solids) | ---- | 10,3 | 38,5 | 91,5 |
| Crosslinker (see Table I) | 47,0 | 47,0 | 47,0 | 47,0 |
| Butyl acetate | 6,0 | 6,0 | 6,0 | 6,0 |
| Methyl amyl ketone | 19,0 | 19,5 | 21,0 | 22,5 |
| Ethyl amyl ketone | 19,0 | 19,5 | 21,0 | 22,5 |
| Dibutyl tin dilaurate (1% in butyl acetate) | 2,04 | 2,04 | 2,04 | 2,04 |
| Copolymer (see Table I) | 0,5 | 0,5 | 0,5 | 0,5 |
| Trimethylolpropane trimercapto-propionate (10% in butyl-acetate) | 2,0 | 2,0 | 2,0 | 2,0 |
| ACID VALUE of polyol component (mg KOH/g) | 0,9 | 2,0 | 5,0 | 10,6 |

For Comparative Examples 9-11, Examples 8-10 (respectively) were repeated except that no trimethylolpropane trimercaptopropionate was added.

These coating compositions were tested for potlife, petrol resistance, methyl ethyl ketone resistance and Persoz hardness (only after 24 hours drying time) as above. The results are presented below in Table VI.

## TABLE VI

| Example | Pot Life | Petrol Resistance | MEK Resistance (sec.) | Persoz Hardness (sec.) |
|---|---|---|---|---|
| 8 | 8 hr. | no soft. | 40 | 106 |
| C9 | 30 min. | no soft. | 40 | 110 |
| 9 | >8 hr. | no soft. | 40 | 80 |
| C10 | 50 min. | no soft. | 40 | 90 |
| 10 | >8 hr. | no soft. | 30 | 78 |
| C11 | 65 min. | no soft. | 40 | 85 |
| C12 | >8 hr. | softening | <10 | 30 |

EP 0 454 219 A1

Example 11 and Comparative Example 13

A coating composition was prepared from the recipe as set forth below in Table VII (quantities are given in grams).

TABLE VII

| Component | EX.11 |
|---|---|
| Polyol C (59,2% solids) | 72,5 |
| Polyol E (59,3% solids) | 18,4 |
| Crosslinker (see Table I) | 47,0 |
| Butyl acetate | 6,0 |
| Methyl amyl ketone | 20,0 |
| Ethyl amyl ketone | 20,0 |
| Dibutyl tin dilaurate (1% in butyl acetate) | 2,04 |
| Copolymer (see Table I) | 0,5 |
| Trimethylolpropane trimercapto propionate (10% in butyl-acetate) | 2,0 |
| ACID VALUE of polyol component (mg KOH/g) | 2,8 |

For Comparative Example 13, Example 11 was repeated except that no trimethylolpropane trimercaptopropionate was added.

The coating composition was tested for potlife, petrol resistance, methyl ethyl ketone resistance and Persoz hardness (only after 24 hours drying time) as above. The results are presented below in Table VIII.

TABLE VIII

| Example | Pot Life | Petrol Resistance | MEK Resistance (sec.) | Persoz Hardness (sec.) |
|---|---|---|---|---|
| 11 | 4 hr. | no soft. | 40 | 85 |
| C13 | 55 min. | no soft. | 45 | 110 |

Discussion of Results

As can be seen from the above, the potlife/cure speed relationship of the polyurethane systems is greatly influenced by both the acid value of the polyol component (and system) as well as the complexing of the polyurethane catalyst.

12

EP 0 454 219 A1

From Examples 1-3 and Comparative Example 4, as well as Examples 8-10 and Comparative Example 13, the importance of the acid value is clearly demonstrated for ambient temperature curing conditions - too high an acid number results in too slow a cure speed.

From Example 1-3 and Comparative Example 1-3, Examples 4-7 and Comparative Examples 5-8, Examples 8-10 and Comparative Examples 9-11, and Example 11 and Comparative Example 13, the importance of utilizing the complexed catalyst is also demonstrated - without the complexing, the potlife significantly decreases.

In other words, only those examples in accordance with the present invention display a long potlife with an acceptable level of curing.

Additionally, from Examples 4-5 and 6-7, it is clearly demonstrated that very low polyol component acid values, which might in certain cases result in an undesirably short potlife, can be compensated by the inclusion of a volatile acid.

Finally, these examples demonstrate that a wide variety of polyols are suitable for use with the present invention, as both polyester polyols (Examples 1-7) and polyacrylic polyols (Examples 8-11) display the same desirable potlife/cure speed balance.

Many modifications and variations besides the embodiments specifically mentioned may be made in the compositions and methods described herein without substantially departing from the concept of the present invention. Accordingly, it should be clearly understood that the form of the invention described herein is exemplary only.

## Claims

1. A catalyzed reaction mixture for producing a polyurethane, which catalyzed reaction mixture comprises (A) a polyol component, (B) a polyisocyanate component and (C) a complexed polyurethane catalyst from (C1) a tin and/or bismuth polyurethane catalyst and (C2) a molar excess of a complexing agent for the polyurethane catalyst, characterized in that the polyol component comprises an acid value of about 5 or less.

2. The catalyzed reaction mixture according to claim 2, characterized in that the polyol component (A) comprises an acid value of about 2 or less.

3. The catalyzed reaction mixture according to claim 1, characterized in that it additionally comprises a volatile acid component.

4. The catalyzed reaction mixture according to claim 3, characterized in that the volatile acid component is selected from volatile acids having a boiling point of about 150°C or less.

5. The catalyzed reaction mixture according to claim 4, characterized in that the volatile acids are selected from monocarboxylic acids having from 1 to 4 carbon atoms.

6. The catalyzed reaction mixture according to claim 1, characterized in that the polyurethane catalyst (C1) is selected from a tin polyurethane catalyst.

7. The catalyzed reaction mixture according to claim 1, characterized in that the complexing agent (C2) is selected from a mercapto compound.

8. The catalyzed reaction mixture according to claim 1, characterizing in that the molar ratio of complexing agent (C2) to metal of the polyurethane catalyst (C1) ranges from 2:1 to 500:1.

9. A method of producing a polyurethane from the catalyzed reaction mixture according to any one of claims 1-8, whereby the polyol component (A) and the polyisocyanate component (B) are reacted in the presence of the complexed tin and/or bismuth polyurethane catalyst (C).

10. The method according to claim 9, characterized in that the reaction takes place at a temperature in the range of from about 0°C to about 40°C.

11. A coating composition based upon the catalyzed reaction mixture according to any one of claims 1-8.

13

12. A method of coating a substrate by applying the coating composition according to claim 11 to the substrate and then curing.

13. The method according to claim 12, characterized in that the curing takes place at a temperature of from about 0°C to about 40°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 188 327 (ASHLAND OIL)<br>* Claims 1,5,7,20; page 2, lines 21-54; example 2<br>* & US-A-4 788 083 (Cat. D)<br>- - - | 1,2,6-13 | C 08 G 18/08<br>C 08 G 18/22<br>C 08 G 18/24<br>C 08 G 18/42 |
| Y | DE-A-1 805 720 (UNIROYAL)<br>* Claims 1-5; page 7, paragraph 2; example 1 *<br>- - - | 1,2,6-13 | C 08 G 18/62<br>C 09 D 175/04 |
| A | US-A-3 119 792 (H. SCHULTHEIS et al.)<br>* Claims 1,2; column 1, line 62 - column 2, line 18 *<br>- - - | 1 | |
| A | FR-A-1 346 808 (BAYER)<br>* Abstract points A1,B1; page 1, right-hand column, last paragraph - page 2, left-hand column, paragraph 1; page 4, left-hand column, paragraph 2; example *<br>- - - | 1 | |
| A | US-A-3 919 174 (R.A. TALLER)<br>* Claims 1,4,12,17; column 2, lines 52-61 *<br>- - - - - | 1-5 | |

|  |
|---|
| TECHNICAL FIELDS SEARCHED (Int. Cl.5) |
| C 08 G |

| | | |
|---|---|---|
| The present search report has been drawn up for all claims | | |
| Place of search | Date of completion of search | Examiner |
| The Hague | 01 August 91 | VAN PUYMBROECK M.A. |